(19) Europäisches Patentamt
European Patent Office
Office européen des brevets

(11) Publication number: **0 485 063 A2**

# (12) EUROPEAN PATENT APPLICATION

(21) Application number: **91308916.5**

(22) Date of filing: **30.09.91**

(51) Int. Cl.[5]: **C08J 3/09**, C08L 67/06, //C08J11/08,(C08L67/06,75:04)

(30) Priority: **19.11.90 US 615188**
**08.11.90 US 610635**
**13.12.90 US 626818**
**18.12.90 US 629513**

(43) Date of publication of application:
**13.05.92 Bulletin 92/20**

(84) Designated Contracting States:
**DE FR GB IT**

(71) Applicant: **TEXACO CHEMICAL COMPANY**
**3040 Post Oak Boulevard**
**Houston, Texas 77056(US)**

(72) Inventor: **Marquis, Edward Thomas**
**9004 Collinfield Drive**
**Austin, Texas 78758(US)**
Inventor: **Cuscurida, Michael**
**3543 Greystone Drive, Suite 1056**
**Austin, Texas 78731(US)**

(74) Representative: **Brock, Peter William et al**
**UROUHART-DYKES & LORD 91 Wimpole Street**
**London W1M 8AH(GB)**

## (54) A method of dissolving cured polyester.

(57) Cured polyester resin can be dissolved by solvent mixtures containing alkylene carbonates, preferably ethylene carbonate or propylene carbonate, as co-solvents. For instance cured fibreglass resin can be removed from tools or substrates in this manner.

A preferred solvent mixture comprises the alkylene carbonate and tetramethylene urea.

EP 0 485 063 A2

The invention relates to a method of dissolving cured polyester, and especially to a method for loosening or removing cured fibreglass resin from tools, processing equipment and other substrates.

A variety of solvents has been used to clean processing equipment, metal parts and tools, after a polyester resin (e.g. as fibreglass) has cured on them. Acetone, methyl ethyl ketone, and diacetone alcohol are the solvents most commonly used to remove cured polyester resin from the substrates to which it is attached. Acetone and methyl ethyl ketone are not favoured, however, because of safety hazards resulting from their high volatilities and low flash points. Additionally, acetone and methyl ethyl ketone are suspected to be neurotoxins. Diacetone alcohol is very polar, and therefore presents processing problems when used alone. Thus, it would be a substantial improvement in the art if a relatively inexpensive yet effective solvent formulation were available to remove cured polyester resins from substrates, and that reduced or avoided the environmental, health and safety problems of the prior art solvent formulations.

US-A-4514530 discloses that epoxy resins can be cured by means of an amine curing agent which is extended by a solution of an elastomeric polyurethane in an alkylene carbonate . We have surprisingly discovered, that a cured polyester resin may be dissolved and may therefore be removed from a substrate, by contacting the polyester resin with an alkylene carbonate, as a co-solvent in a mixture containing one or more other solvents. The present process, by substituting, in whole or in part, alkylene carbonate for the more hazardous prior art solvents, reduces or avoids many of the health, safety and environmental hazards associated with the prior art solvents, and is economically attractive as well.

The present invention relates to method of dissolving a cured polyester comprising contacting said polyester with a solvent system, including an alkylene carbonate, preferably ethylene carbonate or propylene carbonate, as co-solvent.

In a preferred embodiment, the cured polyester, e.g. in the form of fibreglass resin, can be removed from a substrate by being dissolved.

Preferably, the polyester is dissolved at a temperature of 50 to 100 ° C.

According to one preferred embodiment, the alkylene carbonate co-solvent can be mixed with at least one solvent selected from aromatic hydrocarbons, ketones, esters, ethers, glycol ethers, imidazoles, tetramethyl urea, N,N'-dimethylethylene urea, and N-methylpyrrolidone.

A preferred solvent mixture comprises the alkylene carbonate and tetramethyl urea, most preferably in a weight ratio of alkylene carbonate to tetramethyl urea of 1:4 to 4:1.

If desired, the solvent mixture may additionally comprise toluene, methyl isobutyl ketone, or isobutyl isobutyrate.

The preferred alkylene carbonates have the formula

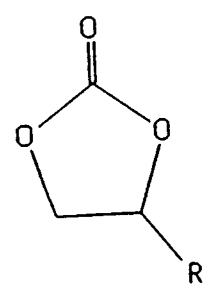

where R is H or alkyl having 1 to 20 carbon atoms. Preferably R is H or methyl, i.e. the alkylene carbonate is preferably ethylene carbonate or propylene carbonate. Ethylene carbonate and propylene carbonate are commercially available from Texaco Chemical Co. as Texacar$^R$ EC Ethylene Carbonate and Texacar$^R$ PC Propylene Carbonate, respectively. Alternatively, a mixture of alkylene carbonates may be used, preferably a mixture of ethylene carbonate and propylene carbonate, such as, for example, Texacar$^R$ EC-50.

Solvents that may be diluted or replaced by alkylene carbonates in the present invention include aromatic hydrocarbons, ketones, esters, ethers, glycol ethers, imidazoles, tetramethyl urea, N,N'-dimethyl ethylene urea, and N-methyl pyrrolidone. For example, good results have been obtained using formulations containing an alkylene carbonate and one or more of the following solvents: tetramethyl urea, toluene, methyl isobutyl ketone, 1,2-dimethylimidazole, N,N'-dimethyl ethylene urea, propylene glycol methyl ether, cyclohexanone, acetophenone, and isobutyl isobutyrate. Optionally, other solvents may be added to the formulations of the present invention as well.

Preferably, the proportion of conventional solvent replaced with alkylene carbonate in a formulation containing one or more conventional (non-alkylene carbonate) solvents will be such that the alkylene carbonate and the conventional solvents in the formulation are present in a weight ratio of alkylene

carbonate to total conventional solvent of about 2:1. Surprisingly, there was no improvement in dissolution power when the weight ratio of alkylene carbonate to conventional solvent was decreased from 2:1 to 1:1. The greatest percentage of cured polyester resin removed was observed when the weight ratio of akylene carbonate to conventional solvents was about 1:3. Those skilled in the art will appreciate that the proportion of conventional solvents in a formulation which should be replaced with alkylene carbonate for a given polyester resin involves a balance of possible reduction in dissolution power versus the reduction or avoidance of additional expense and/or environmental, health and safety risks associated with the conventional solvents. Applicant has demonstrated the use of several different formulations in the example that follow. Alkylene carbonate also may be used alone to dissolve cured polyester resins.

A preferred solvent mixture contains the alkylene carbonate and tetramethyl urea, in any desired relative weight percentage. Preferably, the alkylene carbonate and tetramethyl urea are present in a weight ratio of alkylene carbonate to tetramethyl urea of 1:4 to 4:1, most preferably in a weight ratio of 1:1 or most preferably of 1:2. One skilled in the art may find other weight ratios to be optimum and not depart from the scope of the present invention.

Optionally, other solvents may be added to the formulations of the present invention. For example, excellent results have been obtained using formulations containing, in addition to an alkylene carbonate and tetramethyl urea, one or more of the following solvents: toluene, methyl isobutyl ketone, and isobutyl isobutyrate. When it is desirable to add an additional solvent to the alkylene carbonate/tetramethyl urea mixture, toluene is preferred. Other aromatic hydrocarbons, ketones and esters may be added to the alkylene carbonate/tetramethyl urea formulation, in addition to or in lieu of those mentioned above. Those skilled in the art will appreciate that the use of such additional solvents involves the consideration of obtaining an increase in percent of material loosened or dissolved versus the possible additional expense and increase in environmental, health and safety risks associated with the extra solvents. Applicants have demonstrated several different formulations in the examples that follow.

Optionally, other additives may be employed in the formulations of the present invention. For example, suitable thickeners may be included, such as ethylcellulose, hydroxypropyl cellulose, organic modified clay, hydrogenated castor oil, and the like. Surfactants, to enhance the water washability of the substrate, may be included as well. Suitable surfactants include potassium oleate, the dioctyl ester of sodium sulphosuccinic acid, sodium alkylnaphthalene sulphonate, and sodium alkylbenzene sulphonate.

The method according to the invention is effective at temperatures of from room temperature to 100 ° C and at pressures from 0.1 to 10 MPa. Optionally, the process of the present invention may be performed at an elevated temperature. While the process works well at room temperature, more effective dissolution may be obtained by heating the alkylene carbonate-containing solvent to a temperature of 50 to 100 ° C (e.g. 50 to 75 ° C). The alkylene carbonate-containing solvent may be applied to the polyester resin in any conventional manner. Typically, the polyester resin-coated substrate will be placed in a vat or sonic bath containing the alkylene carbonate (and, optionally, conventional co-solvent). The period for which the alkylene carbonate-containing solvent should be permitted to work undisturbed on the polyester resin to be removed will vary. After that period, agitation of the surfaces to be cleaned of the resin via wiping, brushing or scraping is preferred.

In addition to their use for dissolving cured polyesters, the solvent mixtures described above may also be used to dissolve cured flexible or rigid polyurethane foam, as described in Examples.

The invention will be further illustrated by the following Examples:

## Examples

In the Examples recorded in the Tables below, the following procedure was used. Previously coated stainless steel 19 mm (3/4") screw stock rods were wire brushed and cleaned with a solvent. Rods that had been coated with cured fibreglass were treated with acetone to remove any fibreglass residue; those that had been coated with cured flexible or rigid polyurethane foam were treated with methylene chloride. The rods were then sand blasted with micro beads. The rods were then coated with the materials to be tested. As a typical polyester, there was employed a glycol maleate polyester in styrene (Bradcoat$^R$ by Bradson Supply Inc.) that was cured with methyl ethyl ketone peroxide. The coatings were then allowed to cure for two days or more before dissolution studies were begun. Each coated stock rod was then suspended in a beaker from a ring stand. Each beaker contained one of the alkylene carbonate-containing formulations to be tested. At the bottom of each beaker was a stirring bar. After from 16 to 22 hours at room temperature the rods were observed and the approximate percentage of polyester resin removed by each formulation was estimated and recorded.

Table 1

| Ex No. | Co-Solvent System Components | Wt. Ratio of Components | Approximate % Polyester Resin Removed |
|---|---|---|---|
| 1 | PC/1,2-DMI/Acetone | 80/80/20 | 30 % |
| 2 | EC/TMU/IBIB | 73/65.1/64 | 25 % |
| 3 | EC/TMU/MIBK | 67.8/69/59.8 | 25 % |
| 4 | PC/Acetophenone/Cyclohexanone | 45/45/90 | 25 % |
| 5 | PC/Acetophenone/Cyclohexanone | 45/90/45 | 20 % |
| 6 | PC/Acetophenone/Cyclohexanone | 60/60/60 | 5 % |
| 7 | PC/Acetophenone/Cyclohexanone | 90/45/45 | 2 % |
| 8 | Acetophenone/Cyclohexanone | 90/90 | 2 % |
| 9 | Acetophenone/Cyclohexanone | 120/60 | 1 % |
| 10 | Acetophenone/Cyclohexanone | 60/120 | 1 % |
| 11 | PC/1,2-DMI | 60/120 | 25 % |
| 12 | PC/1,2-DMI | 90/90 | 20 % |
| 13 | PC/1,2-DMI | 120/60 | 20 % |
| 14 | PC/1,2-DMI/MIBK | 80/80/20 | 20 % |
| 15 | PC/1,2-DMI/IBIB | 60/60/60 | 5 % |
| 16 | PC/TMU | 110/110 | 10-25 % |
| 17 | PC/NNDMEU/Acetone | 60/60/60 | 15 % |
| 18 | PC/NNDMEU/1,2-DMI | 60/60/60 | 10 % |
| 19 | PC/NNDMEU/MIBK | 60/60/60 | 10 % |
| 20 | PC/Cyclohexanone | 60/120 | 15 % |
| 21 | PC/Cyclohexanone | 100/100 | 5 % |
| 22 | PC/Cyclohexanone | 120/60 | 5 % |
| 23 | PC/Cyclohexanone/PM | 60/60/60 | 10 % |
| 24 | PC/Acetophenone | 100/100 | 5 % |
| 25 | PC/Acetophenone | 60/120 | 2 % |
| 26 | PC/Acetophenone | 120/60 | 2 % |
| 27 | PC/Acetone | 100/100 | 5 % |
| 28 | PC/N-methyl pyrrolidone | 100/100 | 5 % |
| EC = Ethylene carbonate; PC = Propylene carbonate; TMU = Tetramethyl urea; MIBK = Methyl isobutyl ketone; IBIB = Isobutyl isobutyrate; 1,2-DMI = 1,2-dimethylimidazole; NNDMEU = N,N'-dimethyl ethylene urea; PM = Propylene glycol methyl ether. | | | |

# Table 2

| Ex. No. | Type of Material Cured on Rod | Co-Solvent System Components | Wt. Ratio of Components | Approximate % Material Removed |
|---|---|---|---|---|
| 29 | Cured Flexible Urethane Foam | EC/TMU/MIBK /Toluene | 26.3/41.8/ 41.6/41.9 | 100 % |
| 30 | " | EC/TMU/ Toluene | 66.4/59.2/ 59.0 | 95 % |
| 31 | " | EC/TMU/IBIB | 66.4/59.2/ 58.2 | 90 % |
| 32 | " | EC/TMU/IBIB /Toluene | 47.4/43.5/ 42.9/41.9 | 90 % |
| 33 | " | EC/TMU/MIBK | 64.0/57.4/ 57.3 | 90 % |
| 34 | " | EC/TMU | 106.7/95.7 | 50 % |
| 35 | " | PC/TMU/ Toluene | 1/1/1 | 100 % |
| 36 | " | PC/TMU | 1/1 | 95 % |
| 37 | " | PC/TMU/IBIB | 1/1/1 | 95 % |
| 38 | " | PC/TMU/IBIB /Toluene | 1/1/1/1 | 95 % |
| 39 | " | PC/TMU/MIBK /Toluene | 1/1/1/1 | 90 % |
| 40 | " | PC/TMU/MIBK | 1/1/1 | 75 % |

EC = Ethylene Carbonate; PC = Propylene Carbonate; TMU = Tetramethyl urea; MIBK = Methyl isobutyl ketone; IBIB = Isobutyl isobutyrate.

## Table 3

| Ex. No. | Type of Material Coating Rod | Co-Solvent System Components | Wt. Ratio of Components | Approximate % Material Removed |
|---|---|---|---|---|
| 41 | Cured Polyester Resin | EC/TMU/IBIB | 73/65.1/64 | 25 % |
| 42 | " | TMU | 100 % | 70 % |
| 43 | " | EC/TMU/MIBK | 67.8/69/ 59.8 | 25 % |
| 44 | " | PC/TMU | 1/1 | 10-25 % |

EC = Ethylene Carbonate; PC = Propylene Carbonate; TMU = Tetramethyl urea; MIBK = Methyl isobutyl ketone; IBIB = Isobutyl isobutyrate.

## Table 4

| Ex. No. | Type of Material Coating Rod | Co-Solvent System Components | Wt. Ratio of Components | Approximate % Material Removed |
|---|---|---|---|---|
| 45 | Cured Rigid Urethane Foam | TMU | 100 % | 100 % |
| 46 | " | PC/TMU | 1/2 | 80 % |
| 47 | " | PC/TMU | 1/1 | 50 % |
| 48 | " | PC/TMU | 2/1 | 5 % |
| 49 | " | PC | 100 % | 0 |

EC = Ethylene Carbonate; PC = Propylene Carbonate; TMU = Tetramethyl urea; MIBK = Methyl isobutyl ketone; IBIB = Isobutyl isobutyrate.

The cured flexible urethane foam used in Examples 29 to 40 contained the following components:

| Component | Parts by Weight |
|---|---|
| Thanol$^R$ SF-5505[1] | 60.0 |
| Niax$^R$ 34-28 Polymer Polyol[2] | 40.0 |
| Deionized Water | 3.5 |
| Diethanolamine | 1.5 |
| Silicon Oil L-5309[3] | 1.5 |
| TEXACAT$^R$- 33A[4] (33% TEDA in DPG | 0.5 |
| UL-1 organotin in cmp.)[5] | 0.0065 |
| Toluene diisocyanate | 44.5 |

[1]Arco;
[2]Union Carbide;
[3]Union Carbide;
[4]Texaco Chemical Co.;
[5]Witco Formez$^R$.

The cured rigid urethane foam used in Examples 45 to 49 contained the following components:

| Component | Parts by Weight |
|---|---|
| Thanol$^R$ R-350-X | 36.9 |
| DC-193[1] (silicon surfactant) | 0.5 |
| R11 (trichlorofluoromethane) | 15.0 |
| TEXACAT$^R$ TD-33 | 0.3 |
| Rubinate M[2] (polymeric isocyanate) | 49.6 |

[1]Dow Corning;
[2]ICI.

The cured fibreglass resin used in the Examples 41 to 44 Bradcoat$^R$ (Bradson Supply Inc.) unsaturated polyester in styrene, which was cured with methyl ethyl ketone peroxide.

## Claims

1. A method of dissolving a cured polyester comprising contacting said polyester with a solvent system, characterized in that said solvent system includes an alkylene carbonate as co-solvent.

2. A method according to Claim 1 characterized in that the alkylene carbonate is ethylene carbonate or propylene carbonate.

3. A method according to Claim 1 or 2 characterized in that the cured polyester is removed from a substrate by being dissolved.

4. A method according to any one of Claims 1 to 3 characterized in that the polyester is dissolved at a temperature of 50 to 100 ° C.

5. A method according to any one of Claims 1 to 4 characterized in that a cured polyester resin is dissolved by a solvent mixture comprising the alkylene carbonate co-solvent and at least one solvent selected from aromatic hydrocarbons, ketones, esters, ethers, glycol ethers, imidazoles, tetramethyl urea, N,N'-dimethylethylene urea, and N-methylpyrrolidone.

6. A method according to Claim 3 characterized in that a cured polyester resin is removed from a substrate by a solve nt mixture comprising the alkylene carbonate and tetramethyl urea.

7. A method according to Claim 6 characterized in that the alkylene carbonate and tetramethyl urea are present in the mixture in a weight ratio of alkylene carbonate to tetramethyl urea of 1:4 to 4:1.

**8.** A method according to Claim 6 or 7 characterized in that the solvent mixture additionally comprises toluene, methyl isobutyl ketone, or isobutyl isobutyrate.